# EUROPÄISCHE PATENTANMELDUNG

(11) **EP 4 512 931 A1**
(43) Veröffentlichungstag der Anmeldung: **26.02.2025**
(21) Anmeldenummer: 23020392.9
(22) Anmeldetag: 22.08.2023
(51) Int. Cl.: C25B 1/042, C25B 15/08, H01M 8/0606, H01M 8/0612

(54) **VERFAHREN UND ANLAGE ZUR HERSTELLUNG VON WASSERSTOFF UMFASSEND EINE PYROLYSE EINES KOHLENWASSERSTOFFS**

(71) Anmelder: Linde GmbH, 82049 Pullach (DE); Technische Universität München TUM ForTe Forschungsförderung und Technologietransfer, 80333 München (DE)
(72) Erfinder: Peschel, Andreas, 82049 Pullach (DE); Korn, Wibke, 82049 Pullach (DE); Hirtreiter, Edwin, 82049 Pullach (DE); Klein, Harald, 80290 München (DE); Hemauer, Johanna, 80290 München (DE)
(74) Vertreter: Fischer, Werner

(57) **Zusammenfassung**

Es wird ein Verfahren (100, 200, 300, 400, 500) zur Herstellung von Wasserstoff (H) vorgeschlagen, bei dem ein kohlenwasserstoffhaltiger Einsatz (G) unter Erhalt eines ersten Anteils des Wasserstoffs (H) und Erhalt von Kohlenstoff (C) einer Pyrolyse (10) unterworfen wird. Hierbei ist vorgesehen, dass Dampf (S) unter Erhalt eines zweiten Anteils des Wasserstoffs (H) und unter Erhalt von Sauerstoff (O) einer Hochtemperaturelektrolyse (20, 40) unterworfen wird, wobei zumindest ein Teil des Dampfs (S) durch Abwärme der Pyrolyse (10) erzeugt wird. Eine entsprechende Anlage ist ebenfalls Gegenstand der vorliegenden Erfindung.

## Beschreibung

Die Erfindung betrifft ein Verfahren und eine Anlage zur Herstellung von Wasserstoff umfassend eine Pyrolyse eines Kohlenwasserstoffs.

### Hintergrund

Die konventionelle Wasserstofferzeugung basiert auf Umsetzung von Erdgas, Elektrolyse oder Kohlevergasung. Auf der Basis von Erdgas werden unterschiedliche Konzepte auf Grundlage von Verfahren wie autothermer Reformierung (ATR), partieller Oxidation (POX) und Dampfreformierung mit einer Wassergasshift eingesetzt. Zur Verringerung der direkten Kohlendioxidemissionen können Anlagen für die sogenannte Carbon Capture (CC), d.h. die Abscheidung von Kohlendioxid, eingesetzt werden.

Eine weitere Möglichkeit zur Verringerung der direkten Kohlendioxidemissionen ist die Nutzung der Pyrolyse von Erdgas zur Wasserstofferzeugung. Die im Erdgas enthaltenen gasförmigen (g) Kohlenwasserstoffe (meist Methan) werden dabei in einer endothermen Reaktion bei hohen Temperaturen in gasförmigen Wasserstoff und festen (s) Kohlenstoff zerlegt:

CH₄ (g) → 2 H₂ (g) + C (s) (1)

Auf dem Gebiet der Pyrolyse existieren unterschiedliche Technologien. So nutzen thermische Verfahren hohe Temperaturen, die durch Verbrennung oder elektrische Beheizung erzeugt werden, um das Erdgas zu spalten. Bei thermokatalytischen Verfahren kann die Reaktionstemperatur bzw. Pyrolysetemperatur durch den Einsatz geeigneter Katalysatoren wie Eisen oder Kohlenstoff gesenkt werden. Die Erdgaspyrolyse kann auch unter Verwendung einer Salzschmelze oder eines Metallmediums durchgeführt werden. Eine weitere Möglichkeit, hochwertige Wärme in einen Reaktor zur Pyrolyse zu integrieren, ist die Verwendung von Plasmen.

Es besteht der Bedarf nach insbesondere hinsichtlich ihrer Effizienz verbesserten Verfahren zur Wasserstofferzeugung unter Einsatz einer entsprechenden Pyrolyse.

### Überblick

Vor diesem Hintergrund werden ein Verfahren und eine Anlage zur Herstellung von Wasserstoff umfassend eine Pyrolyse eines Kohlenwasserstoffs mit den jeweiligen Merkmalen der unabhängigen Patentansprüche vorgeschlagen. Ausgestaltungen sind Gegenstand der abhängigen Ansprüche und der nachfolgenden Beschreibung.

Die vorliegende Erfindung und ihre Ausgestaltungen beruhen insbesondere auf der Erkenntnis, dass sich bei einer Kombination bzw. Prozessintegration von Methanpyrolyse und Festoxidelektrolyse (nachfolgend auch synonym als Hochtemperaturelektrolyse bezeichnet) besondere Vorteile erzielen lassen.

Hierbei wird ein Verfahren zur Herstellung von Wasserstoff vorgeschlagen, bei dem ein kohlenwasserstoffhaltiger Einsatz unter Erhalt eines ersten Anteils des Wasserstoffs und unter Erhalt von Kohlenstoff einer Pyrolyse unterworfen wird. Hierbei wird Dampf unter Erhalt eines zweiten Anteils des Wasserstoffs und unter Erhalt von Sauerstoff einer Hochtemperaturelektrolyse unterworfen, wobei zumindest ein Teil des Dampfs durch Abwärme der Pyrolyse erzeugt wird.

In einer Festoxidelektrolysezelle (SOEC) wird Wasserdampf unter Einsatz von elektrischer Energie in Wasserstoff und Sauerstoff aufgespalten:

H₂O (g) - H₂ (g) + 0,5 O (g)

Die SOEC ist eine Hochtemperaturelektrolysezelle, die überhitzten Wasserdampf als Reaktionsmittel nutzt. Da Wasserdampf verwendet wird, ist eine Wärmeintegrationsmöglichkeit mit anderen Prozessen gegeben, durch die der Wirkungsgrad der SOEC im Vergleich zu Niedertemperaturelektrolysesystemen erhöht werden kann. Im vorliegenden Fall wurde erkannt, dass die Kombination bzw. Wärmeintegration mit einer Pyrolyse besonders vorteilhaft ist.

In einer Ausgestaltung umfasst der Einsatz Erdgas, Biogas und/oder Vergasungsgas aus beliebigen Feststoffvergasungsverfahren, wobei es sich insbesondere um ein methanreiches Gas bzw. Gasgemisch handelt. Entsprechende Ausgestaltungen können insbesondere flexibel mit unterschiedlichen Einsätzen betrieben werden.

In einer hier vorgeschlagenen Ausgestaltung wird fühlbare Wärme eines in der Pyrolyse gebildeten Reaktorabflusses zusätzlich zu dem Dampf in die Hochtemperaturelektrolyse übertragen.

Da die Erdgaspyrolyse aufgrund thermodynamischer Gegebenheiten üblicherweise bei Temperaturen von über 800 °C durchgeführt wird, ist die Rückgewinnung dieser hochwertigen Wärme erforderlich, um eine hohe Prozesseffizienz zu erreichen. Diese hochwertige Wärme kann an ein Dampfsystem oder einen Wärmespeicher übertragen werden, und der dabei entstehende überschüssige Dampf kann in einer SOEC effektiv zur Erzeugung von zusätzlichem Wasserstoff genutzt werden. Auf diese Weise wird überschüssiger Dampf vorteilhaft genutzt, und es kann mehr erneuerbare Energie in den Prozess eingebracht werden. Darüber hinaus kann durch eine Kombination von Methanpyrolyse und SOEC mit einem Wärmespeicher ein besonders flexibler Betrieb einer Festoxidelektrolysezelle ermöglicht werden.

Zur Wasserelektrolyse und zu entsprechenden Einrichtungen ("Elektrolyseuren") wird beispielsweise auf den Artikel "Hydrogen" in Ullmann's Encyclopedia of Industrial Chemistry, Wiley-VCH, 15. Juni 2000, DOI: 10.1002/14356007.a13_297, insbesondere Abschnitt 4.2, "Electrolysis", verwiesen. Der technische Hintergrund und Ausgestaltungen insbesondere von Hochtemperatureelektrolysen ist auch beispielsweise in den Absätzen [0019] bis [0024] der EP 3 766 831 A1 beschrieben, auf die an dieser Stelle ausdrücklich Bezug genommen wird, um sie hierdurch in vollem Umfang in die εschreibung aufzunehmen.

Die Vorteile der hier vorgestellten Wärmeintegrationskonzepte sind eine erhöhte Prozesseffizienz und verbesserte Prozessökonomie. Der Erdgasbedarf der Pyrolyse kann gesenkt werden, wenn eine bestimmte Menge des Wasserstoffprodukts angestrebt wird, da der SOEC zusätzlichen Wasserstoff aus dem überschüssigen Dampf der Methanpyrolyse erzeugt und so die Kohlenstoffintensität des Wasserstoffprodukts verringert werden kann. Ein flexibler Betrieb einer SOEC kann mit einem Wärmespeicher ermöglicht werden, um beispielsweise einem schwankenden Angebot erneuerbarer Energien zu folgen.

Gemäß Ausgestaltungen der vorliegenden Erfindung werden unterschiedliche Konzepte zur Wärmeintegration vorgeschlagen, die eine besonders vorteilhafte Kombination von Methanpyrolyse und Festoxidelektrolyse ermöglichen. Insbesondere kann dabei eine Nutzung des überschüssigen Dampfes aus der Methanpyrolyse als Dampfimport für SOEC erfolgen. Auf diese Weise werden die bereits oben erläuterten Vorteile des hier vorgeschlagenen Verfahrens erzielt.

In Ausgestaltungen der Erfindung kann weiters, und insbesondere zusätzlich zum Dampfexport bzw. -import, fühlbare (sensible) Wärme eines in der Pyrolyse gebildeten Reaktorabflusses in die Hochtemperaturelektrolyse übertragen werden, wobei diese Wärme insbesondere zumindest zu einem Teil zur Überhitzung des der Hochtemperaturelektrolyse unterworfenen Dampfs oder eines Teils hiervon verwendet werden kann. Auf diese Weise wird eine weitere vorteilhafte Wärmeintegration geschaffen, die insbesondere unter Verwendung eines oder mehrer geeigneter Wärmetauscher erfolgen kann. Auch die Verwendung zusätzlicher Wärmemedien kann in Ausgestaltungen der vorliegenden Erfindung vorgesehen sein.

In Ausgestaltungen der vorliegenden Erfindung kann die fühlbare Wärme des in der Pyrolyse gebildeten Reaktorabflusses zumindest zum Teil einer Wärmezwischenspeicherung unterworfen werden. Auf diese Weise kann insbesondere eine flexible Anpassung an das Angebot insbesondere an erneuerbarer elektrischer Energie vorgenommen werden.

Entsprechende Ausgestaltungen können insbesondere einen ersten Verfahrensmodus und einen zweiten Verfahrensmodus umfassen, wobei in der Pyrolyse und/oder in der Hochtemperaturelektrolyse in dem ersten Verfahrensmodus eine größere Menge elektrischer Energie eingesetzt wird als in dem ersten Verfahrensmodus, und wobei die Wärmezwischenspeicherung umfasst, in dem ersten Verfahrensmodus Wärme einzuspeichern und in dem zweiten Verfahrensmodus Wärme auszuspeichern und zumindest zu einem Teil in der Hochtemperaturelektrolyse einzusetzen. Der erste Verfahrensmodus wird dabei insbesondere bei hoher Verfügbarkeit bzw. geringem Preis elektrischer Energie durchgeführt, wohingegen der zweite Verfahrensmodus insbesondere bei geringer Verfügbarkeit bzw. hohem Preis elektrischer Energie durchgeführt werden kann.

In Ausgestaltungen der Erfindung kann die Wärmezwischenspeicherung unter Verwendung eines Wärmereservoirs erfolgen, das insbesondere eine Salzschmelze, ein geschmolzenes Metall und/oder ein Phasenwechselmaterial umfassen kann, jedoch auch andere geeignete Wärmereservoire wie beispielsweise Beton oder Steinschüttungen. Die Erfindung kann dabei mit besonders vorteilhaften Wärmereservoirs durchgeführt werden und entsprechende weitere Vorteile bieten.

In Ausgestaltungen der Erfindung kann die Hochtemperaturelektrolyse als brennstoffzellenunterstützte Hochtemperaturelektrolyse durchgeführt werden, wobei ein aus einem Gasstrom aus der Pyrolyse abgetrenntes Gasgemisch zumindest zu einem Teil der brennstoffzellenunterstützten Hochtemperaturelektrolyse zugeführt wird. Auf diese Weise wird eine weitere vorteilhafte Integrationsmöglichkeit geschaffen.

Entsprechende Ausgestaltungen nutzen die an sich bekannte Möglichkeit, die Festoxidbrennstoffzellen- (SOFC) und die SOEC-Technologie zu einer sogenannten SOFEC (Solid Oxide Fuel Assisted Electrolysis Cell), welche hier auch als brennstoff(zellen)unterstützte Hochtemperaturelektrolyse bezeichnet wird, zu kombinieren. Zur Verringerung des Gesamtstromverbrauchs der SOEC-Technologie kann minderwertiger(er) Brennstoff verwendet werden, der z.B. Wasserstoff, Kohlenmonoxid oder Kohlenwasserstoffe enthält. Entsprechender Brennstoff steht insbesondere als ein Restgasstrom aus einer Druckwechseladsorption zur Verfügung, die in Ausgestaltungen der vorgeschlagenen Erfindung zur Aufreinigung des Wasserstoffs aus der Pyrolyse zur Verfügung steht. Ein entsprechender Restgasstrom umfasst insbesondere nicht umgesetztes Methan und einen Teil des nicht in einen entsprechenden Produktstrom überführten Wasserstoffs.

Zu weiteren Details hinsichtlich der SOFEC und der technischen Realisierung wird auf Fachliteratur verwiesen, z.B. Tao et al. ECS Trans. 2011, Bd. 35 Nr. 1, S. 2929. Bei einer brennstoffunterstützten Hochtemperaturelektrolyse wird ein Teil der angelegten Spannung durch eine chemische Potenzialdifferenz als Antriebskraft ersetzt. An der sauerstoffliefernden Elektrode wird Dampf zugeführt.

In weiteren vorteilhaften Ausgestaltungen des vorgeschlagenen Verfahrens kann zumindest ein Teil eines Gasstroms aus der Pyrolyse als Reduktionsmittel in der Hochtemperaturelektrolyse verwendet werden. Auf diese Weise wird eine weitere vorteilhafte Integrationsmöglichkeit geschaffen.

Wie an sich bekannt, können in Hochtemperaturelektrolyseverfahren Anteile des gebildeten Wasserstoffs in die Elektrolyse zurückgeführt werden, um dort reduzierende Bedingungen zu schaffen, die insbesondere einer Alterung der Elektroden entgegenwirken. Dies kann in entsprechenden Ausgestaltungen ggf. vermieden werden, so dass der in der Elektrolyse gebildete Reinwasserstoff vollständig in das Produkt überführt werden kann. Stattdessen kann ein entsprechender Stoffstrom aus der Pyrolyse verwendet werden.

Sämtliche der vorgenannten Maßnahmen (Dampfübertragung, Übertragung fühlbarer Wärme, Wärmezwischenspeicherung, brennstoff(zellen)unterstützte Hochtemperaturelektrolyse und Reduktionsmitteleinsatz) können in Ausgestaltungen der Erfindung in jeweils vorteilhafter, an sich aber beliebiger Weise miteinander kombiniert werden und weitere Ausgestaltungen bilden.

Eine Anlage zur Herstellung von Wasserstoff, die eine Pyrolyseeinheit umfasst und dafür eingerichtet ist, einen kohlenwasserstoffhaltigen Einsatz unter Erhalt eines ersten Anteils des Wasserstoffs und unter Erhalt von Kohlenstoff der Pyrolyseeinheit zuzuführen und in der Pyrolyseeinheit einer Pyrolyse zu unterwerfen, ist ebenfalls Gegenstand der Erfindung. Die vorgeschlagene Anlage zeichnet sich durch eine Hochtemperaturelektrolyseeeinheit aus, die dafür eingerichtet ist, Dampf unter Erhalt eines zweiten Anteils des Wasserstoffs und unter Erhalt von Sauerstoff einer Hochtemperaturelektrolyse zu unterwerfen bzw. einer Hochtemperaturelektrolyseeeinheit zuzuführen, wobei die Anlage dafür eingerichtet ist, zumindest einen Teil des Dampfs durch Abwärme der Pyrolyse zu erzeugen.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

### Figurenkurzbeschreibung

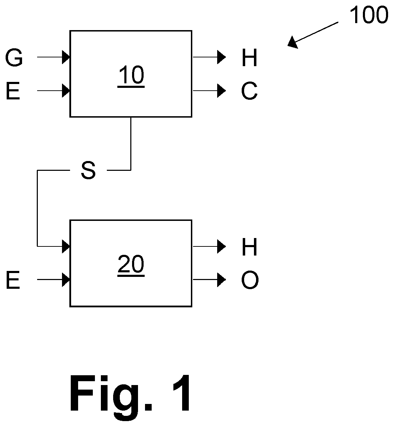

Ausführungsformen der Erfindung werden nachfolgend rein beispielhaft unter Bezugnahme auf die beigefügten Figuren 1 bis 5 beschrieben.

### Ausführungsformen

Die nachfolgend beschriebenen Ausführungsformen werden nur zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

In den Figuren sind Stoff- und Energieflüsse usw. einheitlich bezeichnet. So wird mit G ein eingesetztes Gasgemisch wie Erdgas, mit E eingesetzte elektrische Energie, mit C produzierter fester Kohlenstoff, mit S ein Dampfstrom, mit H pyrolytisch bzw. elektrolytisch produzierter Wasserstoff, mit O pyrolytisch produzierter Sauerstoff, mit Q Prozesswärme, mit T ein Tailgasstrom aus einer Druckwechseladsorption und mit P ein Prozessgasstrom mit beispielsweise Wasserstoff, Kohlenmonoxid, Methan oder anderen Kohlenwasserstoffen bezeichnet ist.

Eine Pyrolyseeinheit mit einem oder mehreren Pyrolysereaktoren bzw. -vorrichtungen ist mit 10, eine Hochtemperaturlektrolyseeinheit mit einem oder mehreren Elektrolysestacks bzw. Elektrolysezellen mit 20 bzw. im Fall einer brennstoff(zellen)unterstützten Hochtemperaturelektrolyse, mit 40 und eine Wärmespeichereinheit mit einer oder mehreren Speichern mit 30 bezeichnet.

Ist nachfolgend von Verfahrensmerkmalen bzw. -schritten die Rede, wird auch von einer Pyrolyse 10, einer Hochtemperaturlektrolyse 20 bzw. 40, und einer Wärmezwischenspeicherung 30 gesprochen.

Die Figuren 1 bis 5 zeigen dabei jeweils, insgesamt mit 100 bis 500 bezeichnete Ausgestaltungen von vorgeschlagenen Verfahren und zugleich Ausgestaltungen entsprechender Anlagen.

Gemäß Figur 1 bzw. Anlage 100 erfolgt eine Nutzung insbesondere überschüssigen Dampfes S aus der Pyrolyse 10 als Dampfimport für die Hochtemperaturelektrolyse 20. Mit anderen Worten dient das hier veranschaulichte Verfahren 100 zur Herstellung von Wasserstoff H, wobei ein kohlenwasserstoffhaltiger Einsatz G, insbesondere Erdgas, unter Erhalt eines ersten Anteils des Wasserstoffs H und unter Erhalt von (festem) Kohlenstoff C der Pyrolyse 10 unterworfen wird. Der Dampf S wird dabei typischerweise in der Qualität bereitgestellt, die bei der Zuführung in die Hochtemepraturelektrolyse benötigt wird. Dies wird ggf. durch vorangehende Verfahrensschritte (Reinigungsschritte) erreicht und sichergestellt. Typischerweise ist eine sehr hohe Dampfqualität, die sich in einer geringen Leitfähigkeit äußert, wichtig. Insbesondere ist die Entfernung von Kieselsäure sehr wichtig.

Dampf S wird dabei unter Erhalt eines zweiten Anteils des Wasserstoffs H und unter Erhalt von Sauerstoff O der Hochtemperaturelektrolyse 20 unterworfen wird, wobei zumindest ein Teil des Dampfs S durch Abwärme der Pyrolyse 10 erzeugt und zumindest zu einem Teil in die Hochtemperaturelektrolyse übertragen wird.

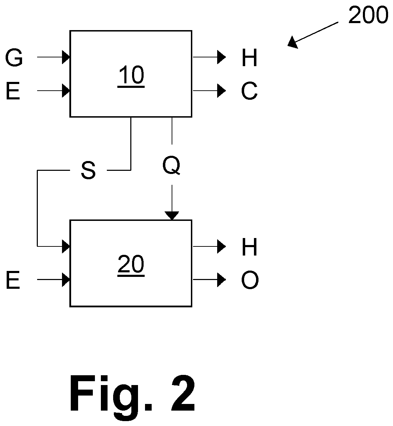

Gemäß Figur 2 bzw. Anlage 200 erfolgt zusätzlich zu diesem Dampfexport bzw. Dampfimport aus der Pyrolyse 10 zur Hochtemperaturelektrolyse 20 eine Übertragung der sensiblen Wärme des heißen Pyrolysereaktorabflusses. Es wird also fühlbare Wärme Q eines in der Pyrolyse 10 gebildeten Reaktorabflusses zusätzlich zu dem Dampf S in die Hochtemperaturelektrolyse 20 übertragen, und diese dient insbesondere zur Überhitzung des in der Hochtemperaturelektrolyse 20 genutzten Dampfs S.

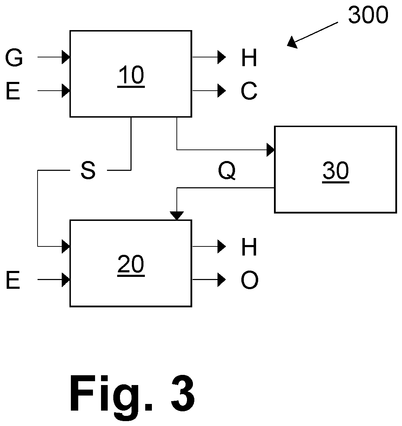

Gemäß Figur 3 bzw. Anlage 300 erfolgt eine Kombination mit einem Wärmereservoir der zuvor erläuterten Art zur Speicherung der Prozesswärme aus dem Pyrolysereaktor, insbesondere um einen flexiblen Betrieb der Hochtemperaturelektrolyse 20 zu ermöglichen. Die fühlbare Wärme des in der Pyrolyse gebildeten Reaktorabflusses wird also, wie veranschaulicht, zumindest zum Teil einer Wärmezwischenspeicherung 30 unterworfen.

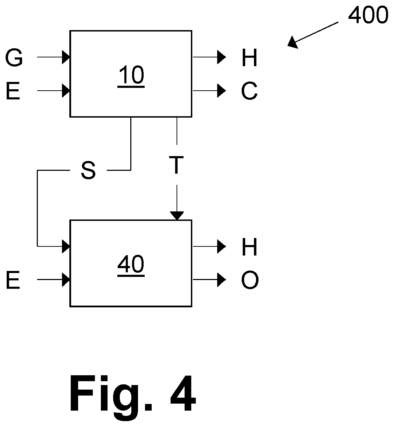

Figur 4 bzw. Anlage 400 veranschaulicht insbesondere eine Kombination mit der Verwendung eines Restgases aus einer der Pyrolyse 10 zugeordneten Druckwechseladsorption in einer als SOFEC ausgestalteten Hochtemperaturelektrolyse 40. Die Hochtemperaturelektrolyse 40 wird also als brennstoffzellenunterstützte Hochtemperaturelektrolyse 40 durchgeführt, wobei ein aus einem Gasstrom aus der Pyrolyse 10 abgetrenntes Gasgemisch T zumindest zu einem Teil der Hochtemperaturelektrolyse 40 zugeführt wird.

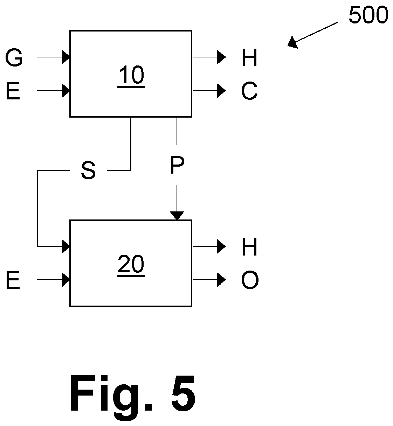

Gemäß Figur 5 bzw. Anlage 500 erfolgt schließlich eine Nutzung des heißen Reaktorabflusses der Pyrolyse 10 direkt als Reduktionsmittel in der Hochtemperaturelektrolyse 20.

Wie erwähnt, können sämtliche der in den Figuren 1 bis 5 bezüglich der Verfahren 100 bis 500 veranschaulichten Maßnahmen (Übertragung von Dampf S gemäß Figur 1 bzw. Verfahren 100, Übertragung fühlbarer Wärme Q gemäß Figur 2 bzw. Verfahren 200, Wärmezwischenspeicherung 30 gemäß Figur 3 bzw. Verfahren 300, brennstoff(zellen)unterstützte Hochtemperaturelektrolyse 40 gemäß Figur 4 bzw.

Verfahren 400 und Einsatz des Produktstroms P als Reduktionsmittel gemäß Figur 5 bzw. Verfahren 500) in Ausgestaltungen der Erfindung in jeweils vorteilhafter, an sich aber beliebiger Weise miteinander kombiniert werden.

## Patentansprüche

1. Verfahren (100, 200, 300, 400, 500) zur Herstellung von Wasserstoff (H), bei dem ein kohlenwasserstoffhaltiger Einsatz (G) unter Erhalt eines ersten Anteils des Wasserstoffs (H) und unter Erhalt von Kohlenstoff (C) einer Pyrolyse (10) unterworfen wird, **dadurch gekennzeichnet, dass** Dampf (S) unter Erhalt eines zweiten Anteils des Wasserstoffs (H) und unter Erhalt von Sauerstoff (O) einer Hochtemperaturelektrolyse (20, 40) unterworfen wird, wobei zumindest ein Teil des Dampfs (S) durch Abwärme der Pyrolyse (10) erzeugt wird.

2. Verfahren (100, 200, 300, 400, 500) nach Anspruch 1, bei dem der Einsatz (G) Erdgas, Biogas und/oder Vergasungsgas ist oder umfasst.

3. Verfahren (200, 300) nach einem der vorstehenden Ansprüche, bei dem fühlbare Wärme (Q) eines in der Pyrolyse (10) gebildeten Reaktorabflusses zusätzlich zu dem Dampf (S) in die Hochtemperaturelektrolyse (20) übertragen wird.

4. Verfahren (200, 300) nach Anspruch 3, bei dem die fühlbare Wärme (Q) des in der Pyrolyse (10) gebildeten Reaktorabflusses zumindest zu einem Teil zur Überhitzung des der Hochtemperaturelektrolyse (20, 40) unterworfenen Dampfs (S) oder eines Teils hiervon verwendet wird.

5. Verfahren (300) nach Anspruch 3 oder 4, bei dem die fühlbare Wärme (Q) des in der Pyrolyse (10) gebildeten Reaktorabflusses zumindest zum Teil einer Wärmezwischenspeicherung (30) unterworfen wird.

6. Verfahren (300) nach Anspruch 5, das einen ersten Verfahrensmodus und einen zweiten Verfahrensmodus umfasst, wobei in der Pyrolyse (10) und/oder in der Hochtemperaturelektrolyse (20) in dem ersten Verfahrensmodus eine größere Menge elektrischer Energie (E) eingesetzt wird als in dem ersten Verfahrensmodus, und wobei die Wärmezwischenspeicherung (30) umfasst, in dem ersten Verfahrensmodus Wärme einzuspeichern und in dem zweiten Verfahrensmodus Wärme auszuspeichern und zumindest zu einem Teil in der Hochtemperaturelektrolyse (20) einzusetzen.

7. Verfahren (300) nach Anspruch 6, bei dem die Wärmezwischenspeicherung (30) unter Verwendung eines Wärmereservoirs erfolgt.

8. Verfahren (400) nach einem der vorstehenden Ansprüche, bei dem die Hochtemperaturelektrolyse (40) als brennstoffzellenunterstützte Hochtemperaturelektrolyse (40) durchgeführt wird, wobei ein aus einem Gasstrom aus der Pyrolyse (10) abgetrenntes Gasgemisch zumindest zu einem Teil der brennstoffzellenunterstützten Hochtemperaturelektrolyse (40) zugeführt wird.

9. Verfahren (400) nach Anspruch 8, bei dem ein in der Pyrolyse (10) gebildetes Gasgemisch oder ein Teil hiervon einer Druckwechseladsorption unterworfen wird, in der Wasserstoff und ein Restgasstrom gebildet werden, wobei das abgetrennte Gasgemisch, das zumindest zu einem Teil der brennstoffzellenunterstützten Hochtemperaturelektrolyse (40) zugeführt wird, zumindest einen Teil des Restgasstroms umfasst.

10. Verfahren (500) nach einem der vorstehenden Ansprüche, bei dem zumindest ein Teil eines Gasstroms aus der Pyrolyse als Reduktionsmittel in der Hochtemperaturelektrolyse (20) verwendet wird.

11. Anlage zur Herstellung von Wasserstoff (H), die eine Pyrolyseeinheit umfasst und dafür eingerichtet ist, einen kohlenwasserstoffhaltigen Einsatz (G) unter Erhalt eines ersten Anteils des Wasserstoffs (H) und unter Erhalt von Kohlenstoff (C) der Pyrolyseeinheit zuzuführen und in der Pyrolyseeinheit einer Pyrolyse (10) zu unterwerfen, **gekennzeichnet durch** eine Hochtemperaturelektrolyseeeinheit, die dafür eingerichtet ist, Dampf (S) unter Erhalt eines zweiten Anteils des Wasserstoffs (H) und unter Erhalt von Sauerstoff (O) einer Hochtemperaturelektrolyse (20, 40) zu unterwerfen bzw. einer Hochtemperaturelektrolyseeeinheit (20, 40) zuzuführen, wobei die Anlage dafür eingerichtet ist, zumindest einen Teil des Dampfs (S) durch Abwärme der Pyrolyse (10) zu erzeugen.

12. Anlage nach Anspruch 11, die zur Durchführung eines Verfahrens nach einem der Ansprüche 1 bis 10 eingerichtet ist.
